Europäisches Patentamt

European Patent Office

Office européen des brevets

(11) Publication number: **0 465 995 A1**

## EUROPEAN PATENT APPLICATION

(21) Application number: **91110949.4**

(22) Date of filing: **02.07.91**

(51) Int. Cl.⁵: **F16B 45/04**

(30) Priority: **12.07.90 IT 2092290**

(43) Date of publication of application:
**15.01.92 Bulletin 92/03**

(84) Designated Contracting States:
**AT CH DE ES FR GB LI**

(71) Applicant: **KONG S.P.A.**
**Via XXV Aprile No 3**
**I-24030 Monte Marenzo Bergamo(IT)**

(72) Inventor: **Bonati, Marco**
**Via Mentana No 75**
**I-22053 Lecco, Como(IT)**

(74) Representative: **Petruzzelli, Antonio**
**Via E. De Amicis No. 25**
**I-20123 Milano(IT)**

(54) Spring catch with triggering member.

(57) The spring catch comprises a C-shaped body (10) having a central opening (11) provided with inlet aperture (12) for the insertion of an outer element, and a slidable closing member (13) for said aperture (12) connected to a hand control member (19) bi-ased by a counter spring (22); a triggering member (26) engaging from said control member (19) protrudes inside the central opening (11) to be actuated by the insertion of said outer element.

Fig. 4

EP 0 465 995 A1

The present invention relates to a spring catch having a new design in which the position of a closing member is controlled by the action of a triggering member which is actuated upon the insertion of a rigid element to which the catch is to be coupled.

Spring catches conventionally consist of a body in the form of a C-shaped bar, having a closing lever pivotably hinged at one end of the C-shaped body; the lever is biased by a spring so as to engage with the other end of the abovementioned body. Optionally, conventional catches may be provided with locking or securing device which prevent accidental or undesired opening of the closing lever. Spring catches of this kind are described for example in European Patent Application No. 318742 of the Applicant and in European Patent No. 289490; other examples may be found in US Patent No. 4401333 and in French Patent Application No. 2476249. Spring catches are also known, in which the closing element is in the form of a sliding member which is biased in the closed position by a spring and which must be manually pulled with a finger in order to open the catch.

Although conventional spring catches generally have a wide opening in order to facilitate coupling, they nevertheless always require a rotational movement of the hand in order to introduce and/or couple the catch to the eye of a wall nail, a bar, a cord or other outer element to which said catch must be joined. Moreover, the lever of the spring catch is normally closed, as a result of which, when coupling the catch, it must be opened by pushing or pulling with one finger of the hand used to retain the same catch.

For these reasons, coupling a conventional spring catch in particularly difficult situations may sometimes prove to be problematic or extremely awkward on account of the care required in order to open and insert the open end of the catch into the eyelet of the nail or outer element to which the said catch is to be coupled. Moreover, the fact that the spring catch has to be opened and kept open using the same hand means that the grip on the catch itself is often lessened.

The object of the present invention is to provide a spring catch with a completely new design which overcomes the drawbacks or the applicational limitations of conventional spring catches, in that it allows the frontal insertion of the spring catch into the eyelet of a nail or the engagement to an outer member to which the catch must be coupled, using the same insertion movement in order to trigger a closing member.

This thus facilitates enormously the operation of coupling the spring catch, which may be carried out in an extremely rapid and safe manner, even under difficult conditions.

A further object of the present invention is to provide a spring catch as referred to above, whereby it is no longer necessary to use the hand to keep the catch open, thus enabling the catch to be held more firmly and more securely during use.

These and other objects can be achieved with a spring catch according to the invention which is characterized by comprising a slidable closing member controlled by triggering member which is opposite to the inlet aperture of the catch and is actuated by the frontal insertion of an outer member through the inlet aperture of the catch itself.

A preferred embodiment of the spring catch according to the present invention is shown in the accompanying drawings, in which:

Fig. 1   is a side view of the spring catch;

Fig. 2   is a front view of the spring catch along the line 2-2 of figure 1;

Fig. 3   is an enlarged sectional view along the line 3-3 of fig. 2 with the spring catch in the closed condition;

Fig. 4   is a section similar to Fig. 3 with the spring catch in the open condition;

Fig. 5   is a section similar to Fig. 4, relating to an alternative embodiment.

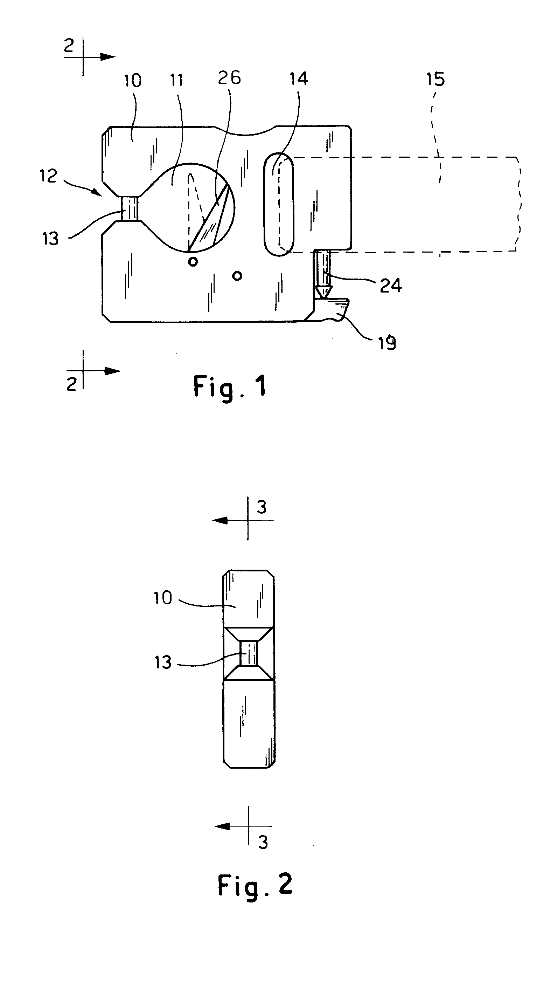

As shown in Figures 1 and 2, the spring catch according to the invention substantially comprises a rigid body 10 in the general shape of a C body, having a central opening 11 which communicates with a front inlet aperture 12 across which there passes a pin or other slidable closing member 13. On the side of the body 10 opposite to the inlet aperture 12 there is an eyelet 14 or transverse opening suitable for receiving a strap, cord or other element 15 designed for coupling or supporting a load as well as for manual gripping, as shown.

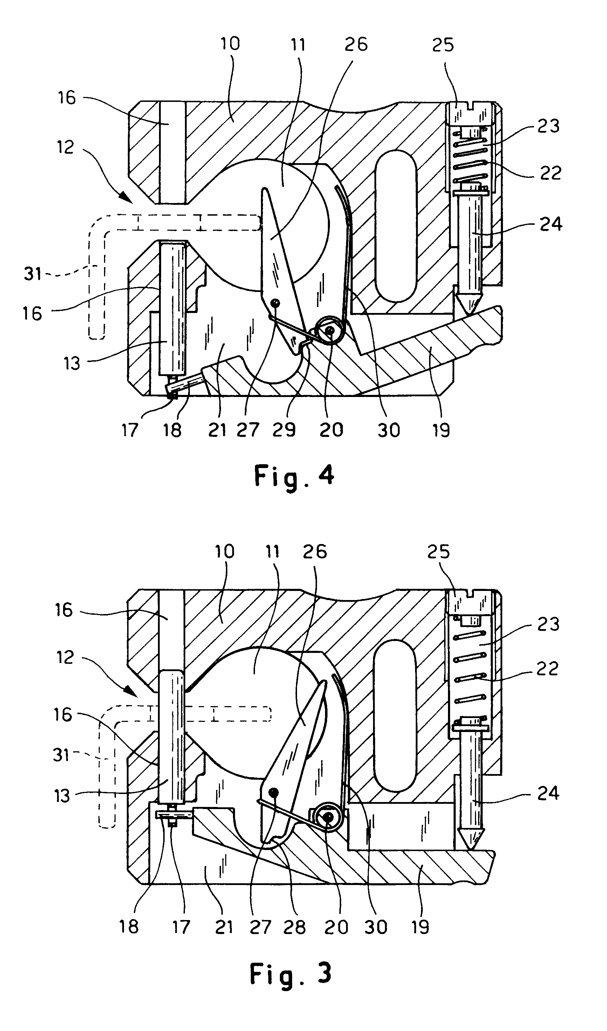

The closing pin 13 for the inlet aperture 12 of the spring catch slides transversely with respect to the inlet itself inside a guide hole 16 formed transversely with respect to the opposed front ends of the C-shaped body of the spring catch, which, as shown, are provided with the slanted guiding surfaces converging in the direction of the aperture 12. The pin 13 has at its bottom end in Figure 3 an elongated eyelet 17 by means of which said pin is linked to a spigot 18 protruding from a manually operable control member in the form of a lever 19 pivotably hinged to the body 10 at the point 20. The lever 19 is provided inside a cavity or seat 21 which opens out both on the outer side and on the inner side towards the central opening 11 of the spring catch. The control lever 19 with its rear end protrudes a short distance from the body 10 of the spring catch and is subject to the biasing action of an elastic counter-force exerted by a spring 22 situated inside a seating 23; the counter spring 22 acts indirectly on the end of the lever 19 via a sliding pin 24 which projects from the seating 23, parallel to the closing pin 13 of the spring catch, extending so as to make contact against the abovementioned lever 19. A plug 25 is screwed into the seat 23 of the spring so as to form a rear abutment for the spring 22.

The hand lever 19 and hence the position of the closing pin 13 is controlled by a triggering member 26 able to engage with and disengage from the operating lever 19 by rotation.

This triggering member 26 is in the form of a lever or trigger pivotably hinged at 27 to the body 10 and on one side extends inside the central opening 11 of the spring catch, being positioned opposite to the front inlet aperture 12, while on the other side it extends inside the seat 21, towards the lever 19, so as to engage with the latter.

In particular, as shown in the sectional views in Figures 3 and 4, the bottom end of the trigger 26 has a step shaped projection 28 by means of which it engage a corresponding projection or step portion 29 of the control lever 19 as clearly shown in Figure 4. A spring 30 acts on the trigger 26 so as to keep it in the engaged condition of Figure 4 where it prevents rotation of the control lever 19, in the open position of the spring catch shown in Figure 4.

The mode of operation of the spring catch described is as follows: by pressing the lever 19, acting with a finger on the protruding end to rotate the same in the counterclock direction, the spring catch is opened, by simultaneously tensioning the spring 22 and cocking the trigger 26 which, as a result of the action of the spring 30, rotates from the position shown in Figure 3 in which the lower end of the trigger protrudes into a cavity of the lever 19, to the position in Figure 4, in which the stepped end 28 of the trigger 26 engages the lever 19 preventing its rotation to keep the catch in the open condition shown. At this point, the spring catch is held between two finger, that is the thumb and the forefinger of a hand holding fast with the palm the gripping element 15 which, can be held firmly such that the maximum grip can be exerted with the hand, the spring catch already being open and ready to snap into the closed position. Therefore, in order to couple the spring catch to the eyelet of a nail or other fastening means 31, it is sufficient to simply move forward the front side of the spring catch 10 until the eyelet of the coupling element 31 passes through the inlet aperture 12 and touches the trigger 26; if the spring catch is now pushed slightly forward, the trigger 26 is made to rotate from the position in Figure 4 to the position in Figure 3, disengaging the control lever 19 which, pushed by the spring 22, automatically snaps forward the pin 13, closing the spring catch as shown in Figure 3. At the same time, clockwise rotation of the trigger 26 has tensioned the spring 30; in this way, the spring catch is firmly coupled to fastening means 31. In order to remove the spring catch, it is sufficient to press again on the lever 19 which will again be brought into the position shown in Figure 4, allowing the spring catch to be removed.

From the above description and accompanying drawings it is therefore clear that a spring catch with a triggering closing device has been provided, whereby coupling can be effected by means of a simple forward movement and automatic closure is possible as a result of the same movement used for coupling the catch. Moreover, since closure of the spring catch is effected automatically by means of the simple moving action of the spring catch, this means that the gripping member 15 can be held more firmly and securely since the hand is freed entirely of the task of having to open or keep the spring catch open.

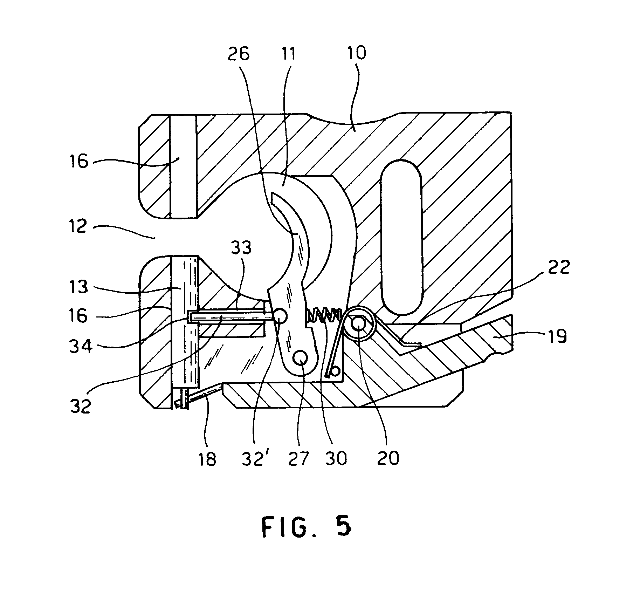

Figure 5 shows a further embodiment of the triggering member of the spring catch. In Figure 5, parts which are similar or operationally equivalent to those shown in the previous figures have been denoted by the same reference numbers.

In contrast to the previous example, in Figure 5 the trigger 26 is elastically biased by a coil spring 30 inside the seat 21 housing the lever 19 and the trigger 26. The trigger 26 engages moreover with the sliding member 13 by means of a strip or spigot 32 linked with the trigger 26 at 32'. The strip or spigot 32 slides inside a bore 33 perpendicular to the hole 16, engaging with its front end in a transverse slot 34 in the closing member 13.

It is therefore understood that above description and accompanying drawings have been provided purely by way of an example of a preferred embodiment of a spring catch which may vary without thereby departing from the inventive principles claimed.

## Claims

1. A spring catch of the type comprising a C-shaped body (10) having a central opening (11) provided with an inlet aperture (12) on a side, and closing means comprising a sliding member (13) subject to the action of an elastically biasing means (22) which tends to move the sliding member (13) from an open condition to a closed condition of the inlet aperture (12) of the spring catch, characterized in that said closing member (13) is connected to a manually operable control means (19) and triggering means elastically biased to operatively engage and disengage the aforementioned closing member, said triggering means comprising a triggering member (26) extending inside the central opening (11) of the catch body (10) in a disposition opposite the inlet aperture (12) of the spring catch.

2. A spring catch according to Claim 1, characterized in that it comprises snap-locking means (28) between said triggering member (26) and said manually operable control means (19).

3. A spring catch according to Claim 1, characterized in that it comprises snap-locking means (32) between said triggering member (26) and said sliding member (13) of the catch closing means.

4. A spring catch according to Claim 1, characterized in that said manually operable control means comprises a control lever (19) pivotably provided in a seat (21) of the spring catch body (10), said control lever (19) at one end being linked to the aforementioned sliding member (13), and being subject to an elastically biasing means (22, 24) to retain said sliding member (13) in the open condition.

5. A spring catch according to Claim 4, characterized in that said biasing means (22, 24) comprises a pin (24) slidingly moving in a guide seat in the body (10) of the spring catch and a spring (22) to urge said sliding pin (24) in the direction of and against the aforementioned control lever (19).

6. A spring catch according to Claim 1, characterized in that the said triggering means is in the form of a triggering lever (26) pivotably connected with the body (10) of the spring catch, said triggering lever (26) extending inside the central opening (11) of the body (10) of the spring catch and towards the aforementioned control lever (19), and detent means (28) on said triggering lever (26) and said control lever (19) to keep said triggering lever (26) in the engaged condition with the control lever (19) in the open position of the spring catch.

7. A spring catch according to Claim 1, characterized in that the body (10) of the catch comprises an additional opening (14) in a position opposite to the said inlet aperture (12) for insertion of a gripping member (15) or means for supporting a load.

8. A spring catch according to Claim 1, characterized in that said inlet aperture (12) is provided with inclined surfaces converging in the direction of said central opening (11).

9. A spring catch according to Claim 1, characterized in that said control means (19) and said triggering member (26) comprise opposingly engaging projections or step portions (28) thereon.

Fig. 1

Fig. 2

Fig. 4

Fig. 3

FIG. 5

European
Patent Office

# EUROPEAN SEARCH REPORT

Application Number

**EP 91 11 0949**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 328 849 (ACCESS EQUIPMENT LTD) <br> * the whole document * <br> – – – | 1-3,6-9 | F 16 B 45/04 |
| A | US-A-2 577 790 (MCCORMIK) <br> * the whole document * <br> – – – | 1,7,8 | |
| A | GB-A-2 001 384 (HENSSGEN KARABINERHAKEN) <br> – – – – – | | |

TECHNICAL FIELDS
SEARCHED (Int. Cl.5)

F 16 B
A 47 F

The present search report has been drawn up for all claims

| Place of search | Date of completion of search | Examiner |
|---|---|---|
| The Hague | 04 October 91 | ARESO Y SALINAS J. |